# EUROPÄISCHE PATENTANMELDUNG

(11) **EP 2 607 196 A2**
(43) Veröffentlichungstag der Anmeldung: **26.06.2013**
(21) Anmeldenummer: 12006338.3
(22) Anmeldetag: 08.09.2012
(51) Int. Cl.: B60T 13/66, B60T 17/22, B60T 17/04

(54) **Energieversogung eines Nutzfahrzeuganhängers**

(30) Priorität: 20.12.2011 DE 102011121580
(71) Anmelder: WABCO GmbH, 30453 Hannover (DE)
(72) Erfinder: Lange, Tobias, 50126 Bergheim (DE); Ronnenberg, Udo, 30900 Wedemark (DE)

(57) **Zusammenfassung**

Die Erfindung betrifft eine Energieversorgungseinrichtung (8) eines Nutzfahrzeuganhängers (2) zur Versorgung elektrischer Komponenten (4, 40, 41 ,42, 43) des Nutzfahrzeuganhängers (2) mit elektrischer Energie, wobei die Energieversorgungseinrichtung (8) dazu eingerichtet ist, mit dem Nutzfahrzeuganhänger (2) mitgeführt zu werden. Die Erfindung betrifft ferner eine Anordnung aus einem elektronischen Steuergerät (4) und einer Energieversorgungseinrichtung (8) der zuvor genannten Art. Außerdem betrifft die Erfindung einen Nutzfahrzeuganhänger (2).

## Beschreibung

Die Erfindung betrifft eine Energieversorgungseinrichtung eines Nutzfahrzeuganhängers zur Versorgung elektrischer Komponenten des Nutzfahrzeuganhängers mit elektrischer Energie gemäß dem Anspruch 1. Die Erfindung betrifft ferner eine Anordnung aus einem elektronischen Steuergerät und einer Energieversorgungseinrichtung der zuvor genannten Art gemäß Anspruch 14. Außerdem betrifft die Erfindung einen Nutzfahrzeuganhänger gemäß Anspruch 17.

Allgemein betrifft die Erfindung das Gebiet von Nutzfahrzeuganhängern mit elektronisch gesteuerten Systemen, insbesondere mit einer durch ein elektronisches Steuergerät elektrisch gesteuerten Bremsanlage. Die elektrische Energieversorgung eines solchen elektronischen Steuergerätes und der mit dem Steuergerät verbundenen elektrischen Komponenten erfolgt über eine elektrische Steckverbindung des Nutzfahrzeuganhängers, über die eine elektrische Verbindung zu einem Zugfahrzeug des Nutzfahrzeuganhängers hergestellt wird. Über die Steckverbindung werden die elektrischen Komponenten des Nutzfahrzeuganhängers mit der elektrischen Anlage des Zugfahrzeuges, insbesondere der Fahrzeugbatterie, verbunden. Eine elektrische Energieversorgung und damit ein Betrieb des elektronischen Steuergeräts und der damit verbundenen Komponenten ist allerdings nur möglich, wenn die elektrische Steckverbindung im Zugfahrzeug eingesteckt ist. Bei einem einzeln abgestellten Nutzfahrzeuganhänger fehlt es daher an einer elektrischen Energieversorgung.

Es ist ferner bekannt, eine Bremslichtleitung des Zugfahrzeugs zur elektrischen Versorgung der elektrischen Komponenten des Nutzfahrzeuganhängers zu verwenden. In diesem Fall sind die elektrischen Komponenten nur dann mit elektrischer Energie versorgt, wenn im Zugfahrzeug das Bremspedal betätigt wird.

Es gibt bei Nutzfahrzeuganhängern aber Situationen, in denen eine elektrische Energieversorgung auch bei einzeln abgestelltem Nutzfahrzeuganhänger erwünscht ist, z.B. wenn durch das elektronische Steuergerät auch die Niveauregelungsfunktion einer Luftfederungsanlage gesteuert wird. In diesem Fall ist es erwünscht, dass die Niveaulage manuell auch bei einzeln ohne Zugfahrzeug abgestelltem Nutzfahrzeuganhänger verändert werden kann. Hierfür ist allerdings eine elektrische Energieversorgung erforderlich. Daher gibt es bereits Vorschläge, in einem Nutzfahrzeuganhänger eine eigene Batterie einzubauen. Da die Batterie nicht permanent elektrische Energie an das elektronische Steuergerät des Nutzfahrzeuganhängers abgeben soll, war bisher ein von einer Bedienperson manuell zu betätigender Ein-/Aus-Schalter vorgesehen, der bei Bedarf zu betätigen war. Zum Aufladen musste die Batterie des Nutzfahrzeuganhängers an ein übliches, externes Batterieladegerät angeschlossen werden.

Die vorbekannten Lösungen hatten den Nachteil, dass ein erhöhter Aufwand für die manuelle Bedienung des Ein-/Aus-Schalters und für das Aufladen der Batterie erforderlich war. Es kam öfter vor, dass die Batterie bei einzeln abgestelltem Nutzfahrzeuganhänger versehentlich nicht wieder abgeschaltet wurde, was dazu führte, dass sie relativ schnell entleert war und zu einem späteren Zeitpunkt, wenn eine elektrische Energieversorgung gebraucht wurde, wegen leerer Batterie nicht zur Verfügung stand. Auch bei korrekter Handhabung des Ein-/Aus-Schalters war es bisher erforderlich, den Ladezustand der Batterie zu überwachen und bei Bedarf ein externes Batterieladegerät anzuschließen.

Der Erfindung liegt die Aufgabe zugrunde, eine vereinfachte Handhabung der im Nutzfahrzeuganhänger installierten Steuersysteme zu ermöglichen.

Diese Aufgabe wird gemäß Anspruch 1 gelöst durch eine Energieversorgungseinrichtung eines Nutzfahrzeuganhängers zur Versorgung elektrischer Komponenten des Nutzfahrzeuganhängers mit elektrischer Energie, wobei die Energieversorgungseinrichtung dazu eingerichtet ist, mit dem Nutzfahrzeuganhänger mitgeführt zu werden, mit den Merkmalen:
a) die Energieversorgungseinrichtung weist wenigstens einen elektrischen Versorgungsausgangsanschluss auf, der zur Verbindung mit einem elektronischen Steuergerät einer elektrisch gesteuerten Bremsanlage und/oder Niveauregelungsanlage des Nutzfahrzeuganhängers eingerichtet ist,
b) die Energieversorgungseinrichtung weist wenigstens einen elektrischen Versorgungseingangsanschluss auf, der zur Verbindung mit wenigstens einer Leitung einer elektrischen Steckverbindung des Nutzfahrzeuganhängers eingerichtet ist, die zum Anschluss an ein Zugfahrzeug des Nutzfahrzeuganhängers ausgebildet ist, wobei die Leitung elektrische Versorgungsenergie vom Zugfahrzeug zum Nutzfahrzeuganhänger überträgt, wobei die Energieversorgungseinrichtung zur Überwachung der über den Versorgungseingangsanschluss zugeführten elektrischen Versorgungsenergie eingerichtet ist,
c) die Energieversorgungseinrichtung weist wenigstens einen Batterieanschluss auf, der zur Verbindung mit wenigstens einem Anschlusspol einer mit dem Nutzfahrzeuganhänger mitgeführten Batterie eingerichtet ist,
d) die Energieversorgungseinrichtung ist dazu eingerichtet, das Steuergerät bzw. die mit dem Steuergerät verbundenen elektrischen Komponenten automatisch erst dann über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Erfüllung wenigstens eines vorbestimmten ersten Überwachungskriteriums ergibt.

Die Erfindung hat den Vorteil, dass der bisherige manuelle Ein-/AusSchalter entfallen kann. Dies vereinfacht die elektrische Anlage und die Verkabelung. Zudem wird die Bedienung einfacher, da der manuell zu betätigende Schalter nicht mehr fehlbedient werden kann. Stattdessen ist eine Energieversorgungseinrichtung vorgesehen, die selbstständig die über den Versorgungseingangsanschluss zugeführte elektrische Versorgungsenergie überwacht und erforderlichenfalls automatisch eine elektrische Versorgung des Steuergeräts bzw. der mit dem Steuergerät verbundenen elektrischen Komponenten aus der Batterie heraus vornimmt. Damit wird aus der Batterie nur elektrische Energie entnommen, wenn dies auch erforderlich ist.

Die Erfindung eignet sich insbesondere für Nutzfahrzeuganhänger, die zum beladen oder Entladen vom Zugfahrzeug abgekoppelt werden, weil das Zugfahrzeug simultan dazu Be- oder Entladen werden soll. Dies ist z.B. bei Deichselanhängern regelmäßig der Fall. Mit der Erfindung werden die elektrischen Komponenten des Nutzfahrzeuganhängers nach dem Abkoppeln vom Zugfahrzeug automatisch weiter mit elektrischer Energie aus der Batterie versorgt, so dass z.B. die manuellen Bedienelemente der elektrisch gesteuerten Niveauregelung ohne Einschränkung weiter zur manuellen Vorgabe eines gewünschten Niveaulage, z.B. an einer Laderampe, benutzt werden können, ohne dass eine besondere Aufmerksamkeit oder Aktivität des Anwenders erforderlich ist, um die Betriebsfähigkeit zu gewährleisten.

An dem Versorgungseingangsanschluss kann z.B. die Dauerplusleitung der elektrischen Steckverbindung des Nutzfahrzeuganhängers, d.h. Klemme 30, angeschlossen werden. Die Batterie kann als wiederaufladbare Batterie (Akkumulator) oder als nicht wiederaufladbare Batterie für eine Einmalverwendung ausgebildet sein.

Die Energieversorgungseinrichtung kann wahlweise direkt mit der elektrischen Steckverbindung des Nutzfahrzeuganhängers verbunden sein oder indirekt über das in diesem Fall dazwischen geschaltete elektronische Steuergerät der elektrisch gesteuerten Bremsanlage und/oder Niveauregelungsanlage des Nutzfahrzeuganhängers.

Gemäß einer vorteilhaften Weiterbildung der Erfindung ist die Energieversorgungseinrichtung dazu eingerichtet, nach Ablauf einer vorbestimmten Nachlaufzeit automatisch das Steuergerät bzw. die mit dem Steuergerät verbundenen elektrischen Komponenten nicht weiter mit über den Batterieanschluss aus der Batterie entnommener elektrischer Versorgungsenergie zu versorgen, wobei die Nachlaufzeit beginnt, wenn die Überwachung der über den Versorgungseingangsanschluss zugeführten elektrischen Versorgungsenergie die Erfüllung des vorbestimmten ersten Überwachungskriteriums ergibt. Dies hat den Vorteil, dass eine Entleerung der Batterie vermieden wird. Dies erfolgt wiederum automatisch, so dass der Anwender sich darum nicht kümmern muss und ein eventuelles Vergessen des Abschaltens vermeiden wird. So schaltet die Energieversorgungseinrichtung die Energieversorgung der elektrischen Komponenten des Nutzfahrzeuganhängers nach dem Abkoppeln vom Zugfahrzeug sofort automatisch auf die Batterie um, hält die Energieversorgung aus der Batterie aber nur für die vorbestimme Nachlaufzeit aufrecht, um eine Entleerung der Batterie zu vermeiden. Daher steht die Batterie auch danach auf Anforderung sofort wieder für eine Energieversorgung zur Verfügung. Die vorbestimmte Nachlaufzeit kann z.B. eine Stunde betragen. Die vorbestimmte Nachlaufzeit kann z.B. durch die Energieversorgungseinrichtung, das elektronische Steuergerät und/oder eine andere Elektronik, z.B. einen Zeitgeber, gesteuert werden. Sofern die vorbestimmte Nachlaufzeit durch das elektronische Steuergerät oder eine andere Elektronik gesteuert wird, teilt das elektronische Steuergerät bzw. die andere Elektronik der Energieversorgungseinrichtung den Ablauf der Nachlaufzeit mit, z.B. durch ein über eine Datenverbindung oder eine sonstige Leitung übertragenes Signal.

Gemäß einer vorteilhaften Weiterbildung der Erfindung ist die Energieversorgungseinrichtung dazu eingerichtet, das Steuergerät bzw. die mit dem Steuergerät verbundenen elektrischen Komponenten automatisch nicht über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Nichterfüllung des vorbestimmten ersten Überwachungskriteriums oder die Erfüllung eines zweiten Überwachungskriteriums ergibt. In solchen Fällen erfolgt die elektrische Versorgung nicht mehr aus der Batterie, so dass das Steuergerät und die mit dem Steuergerät verbundenen elektrischen Komponenten entweder abgeschaltet werden oder auf einem anderen Weg, z.B. über den Versorgungseingangsanschluss oder eine Bremslichtversorgung versorgt werden. Als erstes Überwachungskriterium kann z.B. die Unterschreitung eines bestimmten Grenzwertes des über den Versorgungseingangsanschluss zugeführten Spannungspotentials ausgewertet werden. Als zweites Überwachungskriterium kann z.B. die Überschreitung eines bestimmten weiteren Grenzwertes des über den Versorgungseingangsanschluss zugeführten Spannungspotentials ausgewertet werden, wobei hier ein etwas höherer Grenzwert verwendet werden kann als bei dem ersten Überwachungskriterium. Hierdurch kann eine gewisse Umschalthystherese realisiert werden.

Gemäß einer vorteilhaften Weiterbildung der Erfindung weist die Energieversorgungseinrichtung folgende Merkmale auf:
a) die Energieversorgungseinrichtung weist wenigstens einen Steuereingangsanschluss auf, über den der Energieversorgungseinrichtung Aktivierungssignale zuführbar sind, wobei die Energieversorgungseinrichtung zur Überwachung der über den Steuereingangsanschluss zugeführten Aktivierungssignale eingerichtet ist,
b) die Energieversorgungseinrichtung ist dazu eingerichtet, das Steuergerät bzw. die mit dem Steuergerät verbundenen elektrischen Komponenten automatisch erst dann über den Versorgungsausgangsanschluss mit über den Batterieanschluss aus der Batterie entnommener elektrischer Versorgungsenergie zu versorgen, wenn die Überwachung der über den Versorgungseingangsanschluss zugeführten elektrischen Versorgungsenergie die Erfüllung wenigstens eines vorbestimmten ersten Überwachungskriteriums ergibt und die Überwachung des Steuereingangsanschlusses das Vorliegen wenigstens eines vorbestimmten ersten Aktivierungssignals ergibt.

Durch zusätzliche Berücksichtigung von Aktivierungssignalen an einem Steuereingangsanschluss kann die aktuelle Betriebssituation des Nutzfahrzeuganhängers berücksichtigt werden. Das vorbestimmte erste Aktivierungssignal kann z.B. eine Information über den Einschaltzustand des Zündungsschalters des Zugfahrzeugs enthalten, so dass die Energieversorgungseinrichtung erkennen kann, ob das Zugfahrzeug aktiv in Betrieb ist (Zündung an) oder nicht (Zündung aus). Bei an das Zugfahrzeug angekoppeltem Nutzfahrzeuganhänger ist eine elektrische Energieversorgung der elektrischen Komponenten des Nutzfahrzeuganhängers im Allgemeinen nur erforderlich, wenn im Zugfahrzeug die Zündung eingeschaltet ist. Im Ergebnis wird die Batterie damit nicht unbeabsichtigt mit dem elektronischen Steuergerät verbunden. An dem Steuereingangsanschluss kann z.B. die über die Zündung geschaltete Plusleitung der elektrischen Steckverbindung, d.h. Klemme 15, angeschlossen werden. Das vorbestimmte erste Aktivierungssignal kann dann z.B. das Vorhandensein des Pluspotentials an der Klemme 15 sein oder die Überschreitung eines bestimmten Spannungspotentials.

Gemäß einer vorteilhaften Weiterbildung der Erfindung ist die Energieversorgungseinrichtung dazu eingerichtet, das Steuergerät bzw. die mit dem Steuergerät verbundenen elektrischen Komponenten automatisch nicht über den Versorgungsausgangsanschluss mit über den Batterieanschluss aus der Batterie entnommener elektrischer Versorgungsenergie zu versorgen, wenn die Überwachung des Steuereingangsanschlusses das Nichtvorliegen des vorbestimmten ersten Aktivierungssignals ergibt. Gemäß einer vorteilhaften Weiterbildung der Erfindung weist die Energieversorgungseinrichtung zusätzlich wenigstens einen Zusatzanschluss auf, über den der Energieversorgungseinrichtung Energieanforderungssignale zuführbar sind, wobei die Energieversorgungseinrichtung zur Überwachung der über den Zusatzanschluss zugeführten Energieanforderungssignale eingerichtet ist, und wobei die Energieversorgungseinrichtung dazu eingerichtet ist, automatisch das Steuergerät bzw. die mit dem Steuergerät verbundenen elektrischen Komponenten über den Versorgungsausgangsanschluss mit über den Batterieanschluss aus der Batterie entnommener elektrischer Versorgungsenergie zu versorgen, wenn die Überwachung des Zusatzanschlusses das Vorliegen wenigstens eines vorbestimmten ersten Energieanforderungssignals ergibt. Dies hat den Vorteil, dass weitere Eingangsgrößen in das Management der Energieversorgung des elektronischen Steuergeräts und der damit verbundenen elektrischen Komponenten einbezogen werden können. Es kann dabei ein Zusatzanschluss oder ggf. auch mehrere Zusatzanschlüsse mit der zuvor angegebenen Funktionalität vorgesehen sein. Die Energieversorgungseinrichtung kann z.B. kombiniert mit einem Erweiterungsmodul des elektronischen Steuergeräts ausgebildet sein, das zusätzliche Eingangs- und Ausgangsanschlüsse zum Anschluss weiterer Komponenten des Nutzfahrzeuganhängers aufweist. In diesem Fall können Eingangsanschlüsse des Erweiterungsmoduls zugleich als Zusatzanschluss zur Zuführung von Energieanforderungssignalen verwendet werden. Der Zusatzanschluss kann auch als CAN-Schnittstelle ausgebildet sein oder eine CAN-Schnittstelle aufweisen. In diesem Fall ist die CAN-Schnittstelle eingerichtet zur Datenkommunikation mit dem elektronischen Steuergerät der elektrisch gesteuerten Bremsanlage und/oder Niveauregelungsanlage des Nutzfahrzeuganhängers und/oder einer Steuerelektronik des Zugfahrzeuges. Die CAN-Schnittstelle kann insbesondere als CAN-Schnittstelle für die Beleuchtungsanlage und die Lichtsteuerung des Nutzfahrzeuganhängers ausgebildet sein. Die Energieversorgungseinrichtung kann auch eine oder mehrere weitere CAN-Schnittstellen aufweisen, z.B. eine CAN-Schnittstelle für die Lichtsteuerung und eine CAN-Schnittstelle für die Datenkommunikation mit dem elektronischen Steuergerät der elektrisch gesteuerten Bremsanlage des Nutzfahrzeuganhängers. Dies hat den Vorteil, dass über den Zusatzanschluss eine Art Aufweckfunktion des elektronischen Steuergerätes der elektrisch gesteuerten Bremsanlage realisiert werden kann, indem ein vorbestimmtes erstes Energieanforderungssignal zugeführt wird.

Der Zusatzanschluss kann auch als Bedienelementanschluss ausgebildet sein oder einen Bedienelementanschluss aufweisen. Der Bedienelementanschluss ist zur Verbindung mit einem manuellen Bedienelement, z.B. einem Taster, eingerichtet. Dies hat den Vorteil, dass durch manuelle Bedienung des Bedienelementes die elektrische Versorgung des elektronischen Steuergerätes sowie der damit verbundenen elektrischen Komponenten aus der Batterie aktiviert werden kann. Dies ist insbesondere bei separat abgestelltem Anhängefahrzeug von Vorteil, wenn nach Ablauf der Nachlaufzeit z.B. eine Niveauregelungsfunktion betätigt werden soll.

Gemäß einer vorteilhaften Weiterbildung der Erfindung ist die Energieversorgungseinrichtung dazu eingerichtet, nach Ablauf einer vorbestimmten Zusatzzeit automatisch das Steuergerät bzw. die mit dem Steuergerät verbundenen elektrischen Komponenten nicht mit über den Batterieanschluss aus der Batterie entnommener elektrischer Versorgungsenergie zu versorgen. Dies hat den Vorteil, dass z.B. über das Bedienelement eine temporäre Einschaltung und Versorgung aus der Batterie angefordert werden kann, wobei sichergestellt ist, dass nach der vorbestimmten Zusatzzeit auch automatisch die Versorgung aus der Batterie wieder beendet wird. Hierdurch wird ein versehentliches Vergessen des Abschaltens der Batterieversorgung vermieden. Dies hat den Vorteil, dass ein versehentliches starkes Entladen der Batterie vermieden wird. Es kann z.B. vorgesehen sein, dass durch einmaliges Erzeugen eines vorbestimmten ersten Energieanforderungssignals, z.B. einmalige Betätigung des Bedienelementes, eine einmalige elektrische Versorgung für die vorbestimmte Zusatzzeit erfolgt. Bei nochmaligem Erzeugen des Energieanforderungssignals vor Ablauf der vorbestimmten Zusatzzeit kann die vorbestimmte Zusatzzeit erhöht werden, z.B. verdoppelt. Durch nochmaliges und weiteres Erzeugen von vorbestimmten ersten Energieanforderungssignalen kann in gleicher Weise die vorbestimmte Zusatzzeit entsprechend vervielfacht werden. Die vorbestimmte Zusatzzeit kann z.B. eine Stunde betragen. Die vorbestimmte Zusatzzeit kann z.B. eine Stunde betragen. Die vorbestimmte Zusatzzeit kann z.B. durch die Energieversorgungseinrichtung, das elektronische Steuergerät und/oder eine andere Elektronik, z.B. einen Zeitgeber, gesteuert werden. Sofern die vorbestimmte Zusatzzeit durch das elektronische Steuergerät oder eine andere Elektronik gesteuert wird, teilt das elektronische Steuergerät bzw. die andere Elektronik der Energieversorgungseinrichtung den Ablauf der Zusatzzeit mit, z.B. durch ein über eine Datenverbindung oder eine sonstige Leitung übertragenes Signal.

Gemäß einer vorteilhaften Weiterbildung der Erfindung beendet die Energieversorgungseinrichtung die Versorgung des Steuergerätes bzw. der mit dem Steuergerät verbundenen elektrischen Komponenten mit über den Batterieanschluss aus der Batterie entnommener elektrischer Versorgungsenergie, wenn über den Zusatzanschluss ein Abschaltanforderungssignal empfangen wird. Das Abschaltanforderungssignal kann z.B. durch eine lang anhaltende Betätigung des Bedienelementes erzeugt werden, oder durch das elektronische Steuergerät zur Signalisierung, dass es keine elektrische Versorgung mehr benötigt. Dies hat den Vorteil, dass auch schon vor Ablauf der Nachlaufzeit oder der Zusatzzeit die elektrische Versorgung aus der Batterie beendet werden kann, so dass die Batterie nicht unnötig entladen wird und geschont wird.

Der Versorgungseingangsanschluss und der Versorgungsausgangsanschluss der Energieversorgungseinrichtung können als separate, voneinander getrennte Anschlüsse ausgebildet sein. Gemäß einer vorteilhaften Weiterbildung der Erfindung ist der Versorgungseingangsanschluss mit dem Versorgungsausgangsanschluss zusammengeschaltet oder als der gleiche Anschluss ausgebildet. Dies hat den Vorteil, dass nur ein elektrischer Anschluss hierfür an der Energieversorgungseinrichtung erforderlich ist. Wenn die Energieversorgungseinrichtung nicht direkt mit der elektrischen Steckverbindung des Nutzfahrzeuganhängers verbunden ist, sondern indirekt über das in diesem Fall dazwischen geschaltete elektronische Steuergerät der elektrisch gesteuerten Bremsanlage und/oder Niveauregelungsanlage des Nutzfahrzeuganhängers, ist ein weiterer Vorteil, dass auch nur ein elektrischer Anschluss des elektronischen Steuergerätes für die Verbindung mit dem Versorgungseingangsanschluss und dem Versorgungsausgangsanschluss der Energieversorgungseinrichtung erforderlich ist. Hierdurch kann die Zahl der erforderlichen Anschlüsse und damit Steckkontakte an dem elektronischen Steuergerät minimiert werden. Dies vereinfacht die elektrische Verkabelung, reduziert die Anzahl der Kabel und die damit verbundenen Kosten.

Die Energieversorgungseinrichtung kann als separates Gerät ausgebildet sein. Gemäß einer vorteilhaften Weiterbildung der Erfindung ist die Energieversorgungseinrichtung baulich in die Batterie, in das elektronische Steuergerät, in einen Bremsdruckmodulator oder in ein Eingangs- und Ausgangs-Erweiterungsmodul des elektronischen Steuergeräts integriert. Dies hat den Vorteil, dass kein zusätzliches Gerät im Nutzfahrzeuganhänger montiert und elektrisch verkabelt werden muss. Hierdurch vereinfacht sich der Aufwand für die Verkabelung. Zudem kann die Herstellung der Energieversorgungseinrichtung kostengünstiger erfolgen. Die Energieversorgungseinrichtung und die Batterie können auch in anderer Weise baulich vereinigt sein, z.B. indem die Batterie in die Energieversorgungseinrichtung baulich integriert ist. Hierdurch ergibt sich ein kompakterer Aufbau der erforderlichen Komponenten.

Das elektronische Steuergerät kann insbesondere Teil eines Bremsdruckmodulators sein, der als mechatronische Einheit ausgebildet ist und neben den elektronischen Komponenten z.B. Magnetventile aufweist.

Die Energieversorgungseinrichtung weist für die Zuschaltung und Abschaltung der aus der Batterie entnommenen elektrischen Versorgungsenergie interne Schaltelemente auf, z.B. elektromechanische Schalter oder Halbleiterschalter. Die Energieversorgungseinrichtung weist zur Steuerung der Schaltelemente eine Steuerungselektronik auf, die z.B. mit einem Mikroprozessor ausgebildet sein kann.

Gemäß einer vorteilhaften Weiterbildung der Erfindung weist die Energieversorgungseinrichtung wenigstens ein Überspannungsschutzbauteil auf, das an den Versorgungseingangsanschluss angeschlossen ist und dazu eingerichtet ist, die elektronischen Komponenten der Energieversorgungseinrichtung vor Überspannungspulsen aus der elektrischen Anlage des Zugfahrzeuges zu schützen, insbesondere vor durch den Generator erzeugten Überspannungspulsen. Das Überspannungsschutzbauteil kann z.B. als Suppressor-Diode ausgebildet sein.

Gemäß einer vorteilhaften Weiterbildung der Erfindung weist die Energieversorgungseinrichtung eine Batterieladeschaltung auf, wobei die Energieversorgungseinrichtung dazu eingerichtet ist, die Batterie über die an dem Versorgungseingangsanschluss empfangene elektrische Versorgungsenergie mittels der Batterieladeschaltung zu laden, wenn wenigstens ein vorbestimmtes Ladekriterium erfüllt ist. Dies hat den Vorteil, dass die Energieversorgungseinrichtung automatisch für eine Batterieladung sorgt, so dass der Anwender sich darum nicht kümmern muss. Die Ladung der Batterie kann automatisch über die an dem Versorgungseingangsanschluss empfangene elektrische Versorgungsenergie erfolgen, was den Vorteil hat, dass kein gesondertes Batterieladegerät oder Netzgerät angeschlossen werden muss. Vielmehr kann die Aufladung der Batterie sozusagen nebenbei im Betrieb des Nutzfahrzeuganhängers erfolgen, ohne dass hierfür besondere Vorkehrungen durch den Anwender getroffen werden müssen. Die Batterieladeschaltung kann als separates Zusatzmodul der Energieversorgungseinrichtung ausgebildet sein oder baulich in die Energieversorgungseinrichtung integriert sein. Das vorbestimmte Ladekriterium kann z.B. die Überschreitung eines bestimmten Wertes des über den Versorgungseingangsanschluss zugeführten Spannungspotentials sein. Das Laden der Batterie kann automatisch beendet werden, wenn ein bestimmter Ladezustand der Batterie erkannt wird, z.B. Vollladung. Das Laden der Batterie kann auch dann beendet werden, wenn das über den Versorgungseingangsanschluss zugeführte Spannungspotential einen bestimmten Wert unterschreitet. Zusätzlich kann das Ladekriterium berücksichtigen, dass der Ladezustand der Batterie einen gewissen Mindestwert unterschreitet. Das Ladekriterium ist dann erfüllt, wenn das über den Versorgungseingangsanschluss zugeführte Spannungspotential einen bestimmten Wert überschreitet und der Ladezustand der Batterie einen gewissen Mindestwert unterschreitet.

Die Aufgabe wird gemäß Anspruch 14 ferner gelöst durch eine Anordnung aus einem elektronischen Steuergerät und einer Energieversorgungseinrichtung der zuvor beschriebenen Art, wobei das elektronische Steuergerät elektrisch zwischen die elektrische Steckverbindung des Nutzfahrzeuganhängers, die zum Anschluss an das Zugfahrzeug des Nutzfahrzeuganhängers ausgebildet ist, und der Energieversorgungseinrichtung geschaltet ist, wobei die Energieversorgungseinrichtung mit wenigstens einer Leitung der elektrischen Steckverbindung, die elektrische Versorgungsenergie vom Zugfahrzeug zum Nutzfahrzeuganhänger überträgt, mittelbar über wenigstens einen Energieversorgungsausgangsanschluss des elektronischen Steuergeräts verbunden ist. Dies hat den Vorteil, dass dem elektronischen Steuergerät unmittelbar die von der elektrischen Steckverbindung des Nutzfahrzeuganhängers bereitgestellten elektrischen Größen zur Verfügung stehen. Daher können Sicherheitsmaßnahmen, die für eine sichere Weiterversorgung des elektronischen Steuergeräts auch bei einem Defekt an der Energieversorgungseinrichtung erforderlich sind, mit geringerem Aufwand realisiert werden. Insbesondere würde bei einem Ausfall der Energieversorgungseinrichtung die Versorgung des elektronischen Steuergeräts von der elektrischen Steckverbindung des Nutzfahrzeuganhängers weiterhin sichergestellt sein und nur die Versorgung aus der Batterie ggf. entfallen.

Gemäß einer vorteilhaften Weiterbildung der Erfindung ist vorgesehen, dass das elektronische Steuergerät wenigstens einen Energieversorgungseingangsanschluss aufweist, der zum Anschluss an wenigstens eine Leitung der elektrischen Steckverbindung des Nutzfahrzeuganhängers eingerichtet ist, die zum Anschluss an das Zugfahrzeug des Nutzfahrzeuganhängers ausgebildet ist, wobei die Leitung elektrische Versorgungsenergie vom Zugfahrzeug zum Nutzfahrzeuganhänger überträgt, und wobei der Energieversorgungsausgangsanschluss des elektronischen Steuergeräts über wenigstens ein in dem elektronischen Steuergerät angeordnetes elektronisches Halbleiterbauelement mit dem Energieversorgungseingangsanschluss des elektronischen Steuergeräts abschaltbar verbunden ist, wobei die Verbindung durch das Halbleiterbauelement oder ein anderes abschaltbares Schaltungsbauelement des elektronischen Steuergeräts abschaltbar ist. Die Abschaltbarkeit der elektrischen Verbindung erlaubt bei Bedarf eine Potentialtrennung zwischen den Energieversorgungseinrichtung und der elektrischen Steckverbindung des Nutzfahrzeuganhängers.

Gemäß einer vorteilhaften Weiterbildung der Erfindung ist vorgesehen, dass der Energieversorgungsausgangsanschluss des elektronischen Steuergeräts zum Einspeisen elektrischer Versorgungsenergie von der Energieversorgungseinrichtung in das elektronische Steuergerät über das Halbleiterbauelement, das andere abschaltbare Schaltungsbauelement oder ein anderes Bauelement mit Diodenfunktion auch bei abgeschaltetem Halbleiterbauelement oder anderem abschaltbaren Schaltungsbauelement eingerichtet ist, um das Steuergerät bzw. die mit dem Steuergerät verbundenen elektrischen Komponenten mit elektrischer Versorgungsenergie zu versorgen. Dies hat den Vorteil, dass das elektronische Steuergerät jederzeit, auch wenn das Halbleiterbauelement oder andere abschaltbare Schaltungsbauelement abgeschaltet ist, über die Energieversorgungseinrichtung mit elektrischer Energie versorgt werden kann. Damit kann das elektronische Steuergerät aus einem nicht-energieversorgten Zustand, in dem das Halbleiterbauelement oder andere abschaltbare Schaltungsbauelement naturgemäß abgeschaltet ist, trotzdem über die Energieversorgungseinrichtung mit elektrischer Energie versorgt werden. Ein weiterer Vorteil ist, dass der Stromfluss von dem elektronischen Steuergerät zu der Energieversorgungseinrichtung und der umgekehrte Stromfluss von der Energieversorgungseinrichtung zu dem elektronischen Steuergerät über denselben Anschluss des elektronischen Steuergeräts erfolgen kann, so dass am elektronischen Steuergerät elektrische Anschlüsse gespart werden.

Die Aufgabe wird ferner gelöst durch einen Nutzfahrzeuganhänger mit einer Anordnung der zuvor beschriebenen Art, wie im Anspruch 17 angegeben.

Die Erfindung wird nachfolgend anhand von Ausführungsbeispielen unter Verwendung von Zeichnungen näher erläutert.

Es zeigen:
- Figur 1: - einen Nutzfahrzeuganhänger mit einer Energieversorgungseinrichtung in einer ersten Ausführungsform und
- Figur 2: - einen Nutzfahrzeuganhänger mit einer Energieversorgungseinrichtung gemäß einer zweiten Ausführungsform und
- Figur 3: - eine Anordnung mit einem elektronischen Steuergerät und einer Energieversorgungseinrichtung gemäß einer dritten Ausführungsform.

In den Figuren werden gleiche Bezugszeichen für einander entsprechende Elemente verwendet.

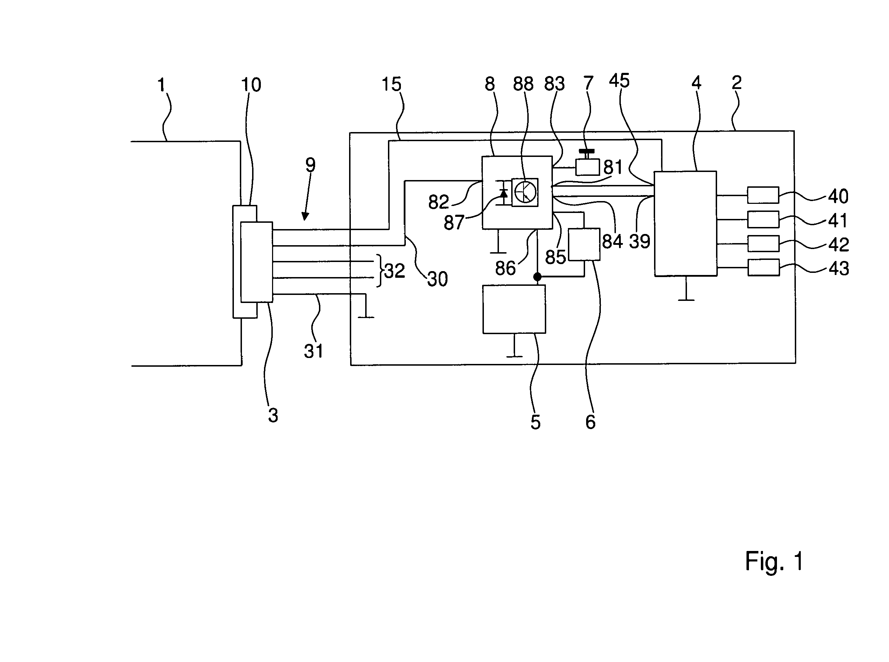

Die Figur 1 zeigt in schematischer Darstellung einen mit einem Zugfahrzeug 1 verbundenen Nutzfahrzeuganhänger 2. Hierbei sind lediglich die für die Beschreibung der Erfindung relevanten elektrischen Komponenten dargestellt. Das Zugfahrzeug 1 weist eine elektrische Kupplung 10 auf, in die eine elektrische Steckverbindung 3 des Nutzfahrzeuganhängers 2 eingesteckt ist. Die elektrische Steckverbindung 3 ist mit einer Mehrzahl von elektrischen Leitungen bzw. Kabeln verbunden, die als Kabelstrang 9 zu dem Nutzfahrzeuganhänger 2 geführt sind und dort mit elektrischen Komponenten verbunden sind. Der Kabelstrang 9 kann z.B. Leitungen gemäß ISO 7638 aufweisen. Für die weitere Beschreibung der Erfindung sei hierbei insbesondere auf folgende Leitungen eingegangen:
- Leitung 15:: Verbindung zur Klemme 15 des Zugfahrzeugs, d.h. zur Plusleitung, die über die Zündung geschaltet wird.
- Leitung 30:: Verbindung zur Klemme 30 des Zugfahrzeugs, d.h. zum Dauerplus.
- Leitung 31:: Verbindung zur Fahrzeugmasse bzw. zur Klemme 31 des Zugfahrzeugs.

Die zusätzlich dargestellten Leitungen 32 können verschiedene Funktionen haben, z.B. eine Datenverbindung oder weitere Energieversorgungsleitungen.

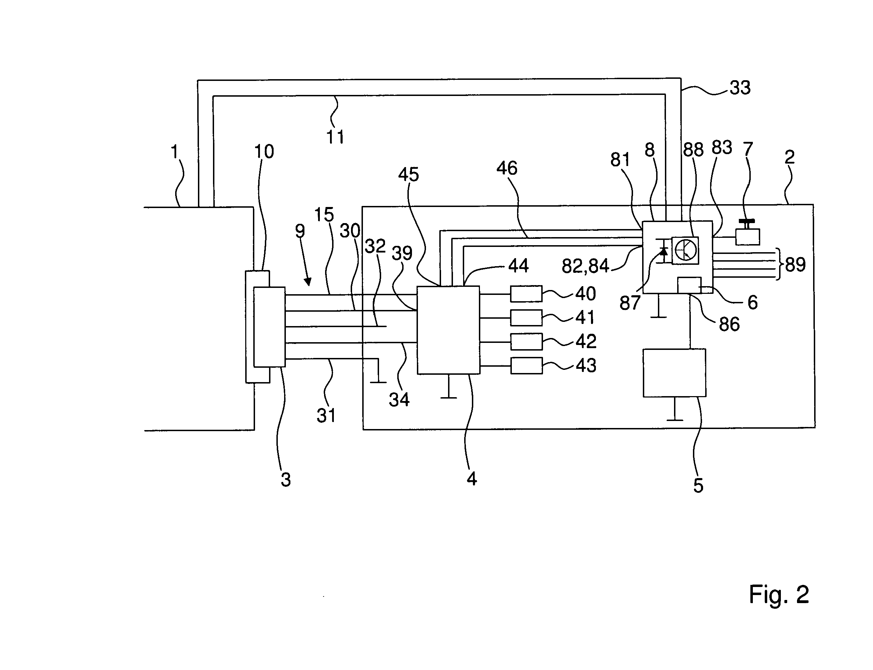

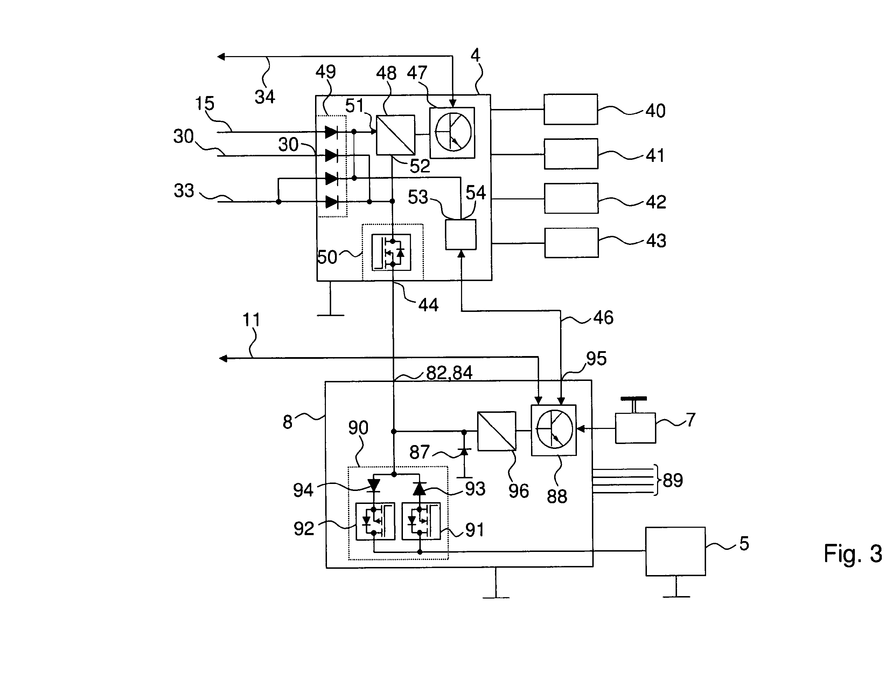

In den Figuren 2 und 3 wird noch auf folgende Leitungen Bezug genommen:
- Leitung 33:: Bremslichtsignal vom Zugfahrzeug.
- Leitung 34:: Datenverbindung zwischen dem Zugfahrzeug 1 und dem Anhängefahrzeug 2. Es kann sich insbesondere um eine erste CAN-Datenverbindung handeln. In diesem Fall ist die Leitung 34 als ein Paar von zwei Leitungen (CAN-H und CAN-L) ausgebildet.

Der Nutzfahrzeuganhänger 2 gemäß Figur 1 weist eine elektrische Energieversorgungseinrichtung 8, ein elektronisches Steuergerät 4 einer elektrisch gesteuerten Bremsanlage und/oder Niveauregelungsanlage des Nutzfahrzeuganhängers 2, eine Batterie 5 sowie eine Ladeschaltung 6 auf. Erkennbar ist außerdem ein manuelles Bedienelement 7 in Form eines Tasters, das ebenfalls an dem Nutzfahrzeuganhänger 2 angeordnet ist. Die Energieversorgungseinrichtung 8 weist einen Steuereingangsanschluss 81 auf, der mit einem Steuerausgangsanschluss 45 des elektronischen Steuergeräts 4 verbunden ist. Die Energieversorgungseinrichtung 8 weist einen Versorgungseingangsanschluss 82 auf, der mit der Leitung 30 verbunden ist. Die Energieversorgungseinrichtung 8 weist einen Versorgungsausgangsanschluss 84 auf, der über eine elektrische Leitung mit einem Energieversorgungseingangsanschluss 39 des elektronischen Steuergeräts 4 verbunden ist. Die Energieversorgungseinrichtung 8 weist einen Batterieanschluss 86 auf, der über eine elektrische Leitung mit der Batterie 5 verbunden ist. Die Energieversorgungseinrichtung 8 weist einen Ladeausgangsanschluss 85 auf, der mit einer Ladeschaltung 6 verbunden ist. Die Ladeschaltung 6 ist ebenfalls mit der Batterie 5 verbunden. Die Energieversorgungseinrichtung 8 weist einen Zusatzanschluss 83 auf, der über eine elektrische Leitung mit dem Bedienelement 7 verbunden ist. Die Energieversorgungseinrichtung 8 weist interne elektronische Bauelemente auf, die als Steuerelektronik 88 in der Figur 1 und den übrigen Figuren wiedergegeben sind. Zum Schutz der Steuerelektronik 88 ist ein Überspannungsschutzbauelement 87 vorgesehen, das der Steuerelektronik 88 vorgeschaltet ist bzw. einer Spannungswandlerschaltung der Steuerelektronik 88.

Das elektronische Steuergerät 4 kann Teil eines Bremsdruckmodulators sein. Das elektronische Steuergerät 4 ist mit elektrischen Komponenten 40, 41, 42, 43 der Bremsanlage und ggf. einer Niveauregelungsanlage verbunden. Die Komponenten 40, 41, 42, 43 können z.B. elektrisch betätigbare Magnetventile, Lampen oder Sensoren sein. Das elektronische Steuergerät 4 ist außerdem mit der Leitung 15 verbunden. Das elektronische Steuergerät 4 gibt das über die Leitung 15 empfangene Spannungssignal, ggf. modifiziert, an dem Steuerausgangsanschluss 45 an die Energieversorgungseinrichtung 8 aus.

Die Energieversorgungseinrichtung 8, die Batterie 5 und das elektronische Steuergerät 4 sind über jeweils eine eigene Masseleitung mit der Leitung 31 und damit mit der Fahrzeugmasse des Zugfahrzeugs verbunden.

Die Energieversorgungseinrichtung 8 wertet die über den Steuereingangsanschluss 81 zugeführten Spannungssignale aus und prüft, ob das vorbestimmte erste Aktivierungssignal vorliegt. Sendet das elektronische Steuergerät 4 das vorbestimmte erste Aktivierungssignal an die Energieversorgungseinrichtung 8 und unterschreitet zugleich die über die Leitung 30 zugeführte Spannung einen bestimmten Grenzwert, verbindet die Energieversorgungseinrichtung 8 über den Batterieanschluss 86 und den Versorgungsausgangsanschluss 84 die Batterie 5 mit dem elektronischen Steuergerät 4, so dass das elektronische Steuergerät 4 aus der Batterie 5 mit elektrischer Energie versorgt wird. Von diesem Zeitpunkt an wird eine Nachlaufzeit überwacht, während der die Energieversorgung aus der Batterie 5 aufrechterhalten wird. Sobald die Nachlaufzeit abgelaufen ist, unterbricht die Energieversorgungseinrichtung 8 die elektrische Energieversorgung des elektronischen Steuergeräts 4 aus der Batterie 5. Die Nachlaufzeit kann z.B. eine Stunde dauern. Die Nachlaufzeit kann entweder durch die Energieversorgungseinrichtung 8 oder durch das elektronische Steuergerät 4 überwacht werden. Es ist auch möglich, dass die Nachlaufzeit sowohl durch die Energieversorgungseinrichtung 8 als auch durch das elektronische Steuergerät 4 überwacht wird. Sofern die Nachlaufzeit durch das elektronische Steuergerät 4 überwacht wird, sendet dieses nach Ablauf der Nachlaufzeit über den Steuerausgangsanschluss 45 der Energieversorgungseinrichtung 8, dass diese die Energieversorgung aus der Batterie 5 abschalten soll. Die Energieversorgungseinrichtung 8 schaltet daraufhin die Energieversorgung aus der Batterie 5 ab.

Zusätzlich wird während dieser Zeit der Batterieladezustand der Batterie 5 überwacht. Wird dabei festgestellt, dass die Batterie 5 entladen ist, wird zur Schonung und zum Schutz der Batterie 5, ggf. auch vor Ende der Nachlaufzeit, die elektrische Versorgung des elektronischen Steuergeräts 4 aus der Batterie 5 durch die Energieversorgungseinrichtung 8 beendet. Die Energieversorgungseinrichtung 8 beendet auch dann, ggf. vor Ablauf der Nachlaufzeit, die Versorgung des elektronischen Steuergeräts 4 aus der Batterie 5, wenn das vorbestimmte erste Aktivierungssignal an dem Steuereingang 81 nicht mehr vorliegt. Auf diese Weise kann auch das elektronische Steuergerät 4 sich aktiv von der elektrischen Versorgung aus der Batterie 5 abschalten, wenn z.B. bestimmte abschließende Regelungsvorgänge durchgeführt sind.

Bei Erkennung einer Betätigung des Bedienelementes 7 verbindet die Energieversorgungseinrichtung 8 das elektronische Steuergerät 4 für eine vorbestimmte Zusatzzeit mit der Batterie 5. Durch mehrmaliges Betätigen des Bedienelementes 7 kann die vorbestimmte Zusatzzeit in Schritten erhöht werden, z.B. bei zweimaligem Betätigen verdoppelt und bei dreimaligem Betätigen verdreifacht werden. Pro Betätigung kann z.B. eine Zusatzzeit von einer Stunde vorgesehen sein. Durch ein durchgehendes langes Betätigen des Bedienelementes 7 kann die Energieversorgungseinrichtung 8 dazu veranlasst werden, die Versorgung des elektronischen Steuergeräts 4 und der daran angeschlossenen elektrischen Komponenten aus der Batterie 5 abzuschalten. Die Zusatzzeit kann entweder durch die Energieversorgungseinrichtung 8 oder durch das elektronische Steuergerät 4 überwacht werden. Es ist auch möglich, dass die Zusatzzeit sowohl durch die Energieversorgungseinrichtung 8 als auch durch das elektronische Steuergerät 4 überwacht wird. Sofern die Zusatzzeit durch das elektronische Steuergerät 4 überwacht wird, sendet dieses nach Ablauf der Zusatzzeit über den Steuerausgangsanschluss 45 der Energieversorgungseinrichtung 8, dass diese die Energieversorgung aus der Batterie 5 abschalten soll. Die Energieversorgungseinrichtung 8 schaltet daraufhin die Energieversorgung aus der Batterie 5 ab. Das elektronische Steuergerät 4 erhält dabei eine Information über die Betätigung des Bedienelementes 7 von der Energieversorgungseinrichtung 8 z.B. über eine Datenverbindung, z.B. die nachfolgend noch erläuterte zweite CAN-Datenverbindung 46.

Sofern die Energieversorgungseinrichtung 8 feststellt, dass die über die Leitung 30 zugeführte elektrische Versorgungsenergie eine ausreichend hohe Spannung aufweist, um für die Aufladung der Batterie 5 geeignet zu sein und zusätzlich der Ladezustand der Batterie 5 ein Aufladen erfordert, gibt die Energieversorgungseinrichtung 8 über den Ladeausgangsanschluss 85 eine aus der über den Versorgungseingangsanschluss 82 empfangenen elektrischen Versorgungsenergie gewonnene elektrische Energie an die Ladeschaltung 6 ab. Die Ladeschaltung 6 bewirkt dann eine Aufladung der Batterie 5. Die Ladeschaltung 6 kann in einer einfachen Realisierung z.B. als Widerstand ausgebildet sein. Die Ladeschaltung 6 kann auch eine elektronisch gesteuerte Ladeschaltung sein, z.B. eine mikroprozessorgesteuerte Ladeschaltung, die eine Aufladung der Batterie 5 nach vorbestimmten Ladeverfahren durchführt.

Die Figur 2 zeigt eine zweite Ausführungsform der Energieversorgungseinrichtung 8 sowie des elektronischen Steuergeräts 4, wobei diese Elemente in anderer Art miteinander verschaltet sind als in der Ausführungsform gemäß Figur 1. Hierbei ist die Energieversorgungseinrichtung 8 von der elektrischen Steckverbindung 3 aus betrachtet elektrisch sozusagen hinter dem elektronischen Steuergerät 4 angeordnet. Die elektrische Steckverbindung 3 sowie der Kabelstrang 9 weisen die zuvor erläuterten Leitungen 15, 30, 33, 34 auf. Hierbei sind alle vier Leitungen 15, 30, 33, 34 direkt mit dem elektronischen Steuergerät 4 verbunden. Von einem Steuerausgangsanschluss 45 des elektronischen Steuergeräts 4 geht, wie bei der Ausführungsform gemäß Figur 1, eine elektrische Leitung zum Steuereingangsanschluss 81 der Energieversorgungseinrichtung 8. Über diese Verbindung kann das elektronische Steuergerät 4 wiederum Aktivierungssignale an die Energieversorgungseinrichtung 8 übermitteln. Ferner ist das elektronische Steuergerät 4 über eine zweite CAN-Datenverbindung 46, z.B. realisiert durch eine Zweidrahtleitung, mit der Energieversorgungseinrichtung 8 zum Datenaustausch verbunden. Für die Übertragung der elektrischen Versorgungsenergie ist der Versorgungseingangsanschluss 82 der Energieversorgungseinrichtung 8 mit einem Energieversorgungsausgangsanschluss 44 des elektronischen Steuergeräts 4 verbunden. Über den Energieversorgungsausgangsanschluss 44 stellt das elektronische Steuergerät 4 der Energieversorgungseinrichtung 8 elektrische Versorgungsenergie bereit, die die elektronische Steuereinrichtung 4 der über die Leitung 30, ggf. auch der Leitung 15, übertragenen elektrischen Energie entnimmt. Die Energieversorgungseinrichtung 8 lädt über die am Versorgungseingangsanschluss 82 empfangene elektrische Energie bei Bedarf die Batterie 5 über die Ladeschaltung 6 auf. Gemäß Figur 2 ist beispielhaft dargestellt, dass die Ladeschaltung 6 in die Energieversorgungseinrichtung 8 baulich integriert ist. In diesem Falle ist nur der eine Batterieanschluss 86 für die Verbindung mit der Batterie 5 erforderlich. Dieser dient sowohl für die Entnahme elektrischer Energie aus der Batterie 5 als auch für die Zuführung elektrischer Energie zu der Batterie 5 beim Laden.

In der Figur 2 ist dargestellt, dass die Energieversorgungseinrichtung 8 über eine dritte CAN-Datenverbindung 11 zusätzlich mit dem Zugfahrzeug 1 verbunden ist. Die dritte Datenverbindung 11 kann z.B. ein CAN-Datenbus für die Lichtsteuerung sein, der über einen Beleuchtungssteckverbinder mit dem Zugfahrzeug 1 verbunden ist. In einer vorteilhaften Ausgestaltung ist die Energieversorgungseinrichtung 8 dazu eingerichtet, einige oder alle Botschaften, die die Energieversorgungseinrichtung 8 über die dritte CAN-Datenverbindung 11 empfängt, über die zweite CAN-Datenverbindung 46 an das elektronische Steuergerät 4 weiterzuleiten. Dies hat den Vorteil, dass das elektronische Steuergerät 4 auch Informationen über die Beleuchtungssteuerung erhält, die ggf. für die Optimierung von Regelungsvorgängen, z.B. bei einer Bremsung, verwendet werden können.

Die Energieversorgungseinrichtung 8 kann baulich vereint mit einem Eingangs- und Ausgangs-Erweiterungsmodul des elektronischen Steuergeräts 4 ausgebildet sein. In diesem Fall weist die Energieversorgungseinrichtung 8 weitere Anschlüsse 89 auf, die in der Figur 2 symbolisch dargestellt sind. An die Anschlüsse 89 können z.B. Sensoren, Schalter oder Aktoren, wie z.B. Magnetventile, angeschlossen werden. Die Energieversorgungseinrichtung 8 ist dazu eingerichtet, über die zweite CAN-Datenverbindung 46 Daten, die über als Eingänge verwendete Anschlüsse 89 empfangen werden, zu dem elektronischen Steuergerät 4 zu übermitteln und von dem elektronischen Steuergerät 4 über die zweite CAN-Datenverbindung 46 empfangene Betätigungsdaten als Betätigungssignale über als Ausgang verwendete Anschlüsse 89 an daran angeschlossene Aktoren auszugeben.

Die Figur 3 zeigt eine weitere Ausführungsform einer elektronischen Steuereinrichtung 4 und einer damit verbundenen Energieversorgungseinrichtung 8, wobei diese wiederum an einem Nutzfahrzeuganhänger 2 angeordnet sind. Die Energieversorgungseinrichtung 8 ist mit dem elektronischen Steuergerät 4 und der Batterie 5 sowie mit dem Bedienelement 7 in gleicher Weise verbunden wie zuvor bezüglich Figur 2 erläutert. Die Figur 3 zeigt zusätzlich eine in dem elektronischen Steuergerät 4 vorgesehene Spannungswandlerschaltung 48, die zur Versorgung einer internen Steuerelektronik 47 des elektronischen Steuergeräts 4 dient. Durch die Spannungswandlerschaltung 48 wird beispielsweise eine Eingangsspannung von 24V, wie sie im Nutzfahrzeugbereich verwendet wird, auf einen für Digitalbausteine üblichen 5V-Pegel gewandelt. Das elektronische Steuergerät 4 ist über eine mit mehreren Dioden versehene Eingangsschaltung 49 mit den Leitungen 15, 30 und 33 verbunden. Erkennbar ist, dass über jeweils eine Diode sowohl die über die Leitung 15 zugeführte Spannung als auch die über die Leitung 33 zugeführte Spannung einen Steueranschluss 51 der Spannungswandlerschaltung 48 zugeführt werden. Der Steueranschluss 51 dient zum Steuern der Spannungswandlerschaltung 48, d.h. zum Ein- und Ausschalten der von der Spannungswandlerschaltung 48 an die Steuerelektronik 47 abgegebenen Spannung. Durch die Spannungswandlerschaltung 48 wird dann die Steuerelektronik 47 mit elektrischer Energie versorgt, wenn entweder die Zündung des Zugfahrzeugs eingeschaltet ist, d.h. die Leitung 15 Spannung führt, oder das Bremspedal betätigt ist, d.h. ein Bremslichtsignal über die Leitung 33 übertragen wird. Über jeweils eine weitere Diode der Eingangsschaltung 49 ist sowohl die an der Leitung 30 anliegende Spannung als auch die an der Leitung 33 anliegende Spannung einerseits einem Energieversorgungsanschluss 52 der Spannungswandlerschaltung 48 und andererseits einer Ausgangsstufe 50 des elektronischen Steuergeräts 4 zugeführt. Die Spannungswandlerschaltung 48 erzeugt aus der am Energieversorgungsanschluss 52 anstehenden Spannung die elektrische Versorgungsspannung der Steuerelektronik 47, wenn am Steueranschluss 51 das entsprechende Signal anliegt.

Die Ausgangsstufe 50 des elektronischen Steuergeräts 44 ist mit dem Energieversorgungsausgangsanschluss 44 verbunden. In einem ersten Betriebsmodus versorgt das elektronische Steuergerät 4 über den Energieversorgungsausgangsanschluss 44 die Energieversorgungseinrichtung 8 mit elektrischer Energie aus den über die Leitungen 30 bzw. 33 zugeführten elektrischen Energien. Die Ausgangsstufe 50 kann z.B. einen Halbleiterschalter in Form eines Feldeffekttransistors enthalten, durch den die Ausgangsstufe 50 bzw. der Energieversorgungsausgangsschluss 44 bei Bedarf auch abschaltbar ist. In einem zweiten Betriebsmodus dient der Energieversorgungsausgangsanschluss 44 zugleich zur Aufnahme von elektrischer Energie von der Energieversorgungseinrichtung 8. Hierbei kann die Ausgangsstufe 50 sozusagen in umgekehrter Richtung betrieben werden, auch wenn der Halbleiterschalter abgeschaltet ist. Über eine in die Ausgangsstufe 50 integrierte Reversediode kann elektrische Energie über den Energieversorgungsausgangsanschluss 44 sozusagen rückwärts in das elektronische Steuergerät 4 eingespeist werden.

Die Energieversorgungseinrichtung 8 weist eine eigene Spannungswandlerschaltung 92 auf, die die gleiche Funktion hat wie die Spannungswandlerschaltung 48 des elektronischen Steuergeräts 4. Über die Spannungswandlerschaltung 92 wird die Steuerelektronik 88 der Energieversorgungseinrichtung 8 mit einer für Digitalbauteile geeigneten Spannung versorgt. Die Energieversorgungseinrichtung 8 weist eine Steuerschaltung 90 auf, mit der die Energieentnahme aus der Batterie 5 sowie die Aufladung der Batterie 5 gesteuert werden kann. Hierzu weist die Steuerschaltung 90 zwei Schaltungszweige auf. Ein zum Laden der Batterie 5 dienender Schaltungszweig weist einen mit einer Diode 94 in Reihe geschalteten ersten Halbleiterschalter 92 auf. Ein für die Energieentnahme aus der Batterie 5 vorgesehener Schaltungszweig weist einen mit einer Diode 93 in Reihe geschalteten zweiten Halbleiterschalter 91 auf. Die beiden Schaltungszweige sind miteinander parallel geschaltet, wobei die Dioden 93, 94 entgegengesetzt angeordnet sind, d.h. antiparallel geschaltet sind. Die Halbleiterschalter 91, 92 werden über die Steuerelektronik 88 gesteuert. Der für die Aufladung der Batterie 5 vorgesehene Schaltungszweig mit den Bauelementen 82, 94 stellt dabei die Ladeschaltung dar.

Wie ferner erkennbar ist, ist das an den Steueranschluss 51 der Spannungswandlerschaltung 48 des elektronischen Steuergeräts 4 geführte Spannungssignal zugleich an eine Schaltung 53 geführt, die mit der zweiten CAN-Datenverbindung 46 in Verbindung steht. Die Schaltung 53 ist dazu eingerichtet, das an ihrem Eingangsanschluss 54 anstehende Spannungssignal in eine CAN-Datenbotschaft zu integrieren und damit als Datensignal über die zweite CAN-Datenverbindung 46 an die Steuerelektronik 88 der Energieversorgungseinrichtung 8 zu übermitteln. Auf diese Weise kann auch über die CAN-Datenverbindung 46 die Information, ob das elektronische Steuergerät 4 aus der Batterie 5 mit elektrischer Energie versorgt werden soll oder nicht, an die Energieversorgungseinrichtung 8 übermittelt werden. Hierdurch wird ein redundanter Datenübermittlungspfad geschaffen.

## Patentansprüche

1. Energieversorgungseinrichtung (8) eines Nutzfahrzeuganhängers (2) zur Versorgung elektrischer Komponenten (4, 40, 41 ,42, 43) des Nutzfahrzeuganhängers (2) mit elektrischer Energie, wobei die Energieversorgungseinrichtung (8) dazu eingerichtet ist, mit dem Nutzfahrzeuganhänger (2) mitgeführt zu werden, mit den Merkmalen:
a) die Energieversorgungseinrichtung (8) weist wenigstens einen elektrischen Versorgungsausgangsanschluss (84) auf, der zur Verbindung mit einem elektronischen Steuergerät (4) einer elektrisch gesteuerten Bremsanlage und/oder Niveauregelungsanlage des Nutzfahrzeuganhängers (2) eingerichtet ist,
b) die Energieversorgungseinrichtung (8) weist wenigstens einen elektrischen Versorgungseingangsanschluss (82) auf, der zur Verbindung mit wenigstens einer Leitung (30) einer elektrischen Steckverbindung (3) des Nutzfahrzeuganhängers (2) eingerichtet ist, die zum Anschluss an ein Zugfahrzeug (1) des Nutzfahrzeuganhängers (2) ausgebildet ist, wobei die Leitung (30) elektrische Versorgungsenergie vom Zugfahrzeug (1) zum Nutzfahrzeuganhänger (2) überträgt, wobei die Energieversorgungseinrichtung (8) zur Überwachung der über den Versorgungseingangsanschluss (82) zugeführten elektrischen Versorgungsenergie eingerichtet ist,
c) die Energieversorgungseinrichtung (8) weist wenigstens einen Batterieanschluss (86) auf, der zur Verbindung mit wenigstens einem Anschlusspol einer mit dem Nutzfahrzeuganhänger (2) mitgeführten Batterie (5) eingerichtet ist,
d) die Energieversorgungseinrichtung (8) ist dazu eingerichtet, das Steuergerät (4) bzw. die mit dem Steuergerät verbundenen elektrischen Komponenten (40, 41, 42, 43) automatisch erst dann über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Erfüllung wenigstens eines vorbestimmten ersten Überwachungskriteriums ergibt.

2. Energieversorgungseinrichtung nach Anspruch 1, **dadurch gekennzeichnet, dass** die Energieversorgungseinrichtung (8) dazu eingerichtet ist, nach Ablauf einer vorbestimmten Nachlaufzeit automatisch das Steuergerät (4) bzw. die mit dem Steuergerät (4) verbundenen elektrischen Komponenten (40, 41, 42, 43) nicht weiter mit über den Batterieanschluss (86) aus der Batterie (5) entnommener elektrischer Versorgungsenergie zu versorgen, wobei die Nachlaufzeit beginnt, wenn die Überwachung der über den Versorgungseingangsanschluss (82) zugeführten elektrischen Versorgungsenergie die Erfüllung des vorbestimmten ersten Überwachungskriteriums ergibt.

3. Energieversorgungseinrichtung nach einem der vorhergehenden Ansprüche, **dadurch gekennzeichnet, dass** die Energieversorgungseinrichtung (8) dazu eingerichtet ist, das Steuergerät (4) bzw. die mit dem Steuergerät (4) verbundenen elektrischen Komponenten (40, 41, 42, 43) automatisch nicht über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Nichterfüllung des vorbestimmten ersten Überwachungskriteriums oder die Erfüllung eines zweiten Überwachungskriteriums ergibt.

4. Energieversorgungseinrichtung nach einem der vorhergehenden Ansprüche, **dadurch gekennzeichnet, dass** das erste Überwachungskriterium die Unterschreitung eines bestimmten Grenzwerts des über den Versorgungseingangsanschluss (82) zugeführten Spannungspotentials ist.

5. Energieversorgungseinrichtung nach einem der vorhergehenden Ansprüche mit den Merkmalen:
a) die Energieversorgungseinrichtung (8) weist wenigstens einen Steuereingangsanschluss (81) auf, über den der Energieversorgungseinrichtung (8) Aktivierungssignale zuführbar sind, wobei die Energieversorgungseinrichtung (8) zur Überwachung der über den Steuereingangsanschluss (81) zugeführten Aktivierungssignale eingerichtet ist,
b) die Energieversorgungseinrichtung (8) ist dazu eingerichtet, das Steuergerät (4) bzw. die mit dem Steuergerät (4) verbundenen elektrischen Komponenten (40, 41, 42, 43) automatisch erst dann über den Versorgungsausgangsanschluss (84) mit über den Batterieanschluss (86) aus der Batterie (5) entnommener elektrischer Versorgungsenergie zu versorgen, wenn die Überwachung der über den Versorgungseingangsanschluss (82) zugeführten elektrischen Versorgungsenergie die Erfüllung wenigstens eines vorbestimmten ersten Überwachungskriteriums ergibt und die Überwachung des Steuereingangsanschlusses (81) das Vorliegen wenigstens eines vorbestimmten ersten Aktivierungssignals ergibt.

6. Energieversorgungseinrichtung nach Anspruch 5, **dadurch gekennzeichnet, dass** die Energieversorgungseinrichtung (8) dazu eingerichtet ist, das Steuergerät (4) bzw. die mit dem Steuergerät (4) verbundenen elektrischen Komponenten (40, 41, 42, 43) automatisch nicht über den Versorgungsausgangsanschluss (84) mit über den Batterieanschluss (86) aus der Batterie (5) entnommener elektrischer Versorgungsenergie zu versorgen, wenn die Überwachung des Steuereingangsanschlusses (81) das Nichtvorliegen des vorbestimmten ersten Aktivierungssignals ergibt.

7. Energieversorgungseinrichtung nach einem der vorhergehenden Ansprüche, **dadurch gekennzeichnet, dass** die Energieversorgungseinrichtung (8) zusätzlich einen Zusatzanschluss (83, 95) aufweist, über den der Energieversorgungseinrichtung (8) Energieanforderungssignale zuführbar sind, wobei die Energieversorgungseinrichtung (8) zur Überwachung der über den Zusatzanschluss (83, 95) zugeführten Energieanforderungssignale eingerichtet ist, und dass die Energieversorgungseinrichtung (8) dazu eingerichtet ist, automatisch das Steuergerät (4) bzw. die mit dem Steuergerät (4) verbundenen elektrischen Komponenten (40, 41, 42, 43) über den Versorgungsausgangsanschluss (84) mit über den Batterieanschluss (86) aus der Batterie (5) entnommener elektrischer Versorgungsenergie zu versorgen, wenn die Überwachung des Zusatzanschlusses (83, 95) das Vorliegen wenigstens eines vorbestimmten ersten Energieanforderungssignals ergibt.

8. Energieversorgungseinrichtung nach Anspruch 7, **dadurch gekennzeichnet, dass** der Zusatzanschluss (83, 95) als Bedienelementanschluss (83) ausgebildet ist oder diesen aufweist, wobei der Bedienelementanschluss (83) zur Verbindung mit einem manuellen Bedienelement (7) eingerichtet ist.

9. Energieversorgungseinrichtung nach einem der Ansprüche 7 bis 8, **dadurch gekennzeichnet, dass** die Energieversorgungseinrichtung (8) dazu eingerichtet ist, nach Ablauf einer vorbestimmten Zusatzzeit automatisch das Steuergerät (4) bzw. die mit dem Steuergerät (4) verbundenen elektrischen Komponenten (40, 41, 42, 43) nicht mit über den Batterieanschluss (86) aus der Batterie (5) entnommener elektrischer Versorgungsenergie zu versorgen.

10. Energieversorgungseinrichtung nach einem der vorhergehenden Ansprüche, **dadurch gekennzeichnet, dass** der Versorgungseingangsanschluss (82) mit dem Versorgungsausgangsanschluss (84) zusammengeschaltet ist oder als der gleiche Anschluss (84) ausgebildet ist.

11. Energieversorgungseinrichtung nach einem der vorhergehenden Ansprüche, **dadurch gekennzeichnet, dass** die Energieversorgungseinrichtung (8) wenigstens ein Überspannungsschutzbauteil (87) aufweist, das an den Versorgungseingangsanschluss (82) angeschlossen ist und dazu eingerichtet ist, die elektronischen Komponenten (88, 92) der Energieversorgungseinrichtung (8) vor Überspannungspulsen aus der elektrischen Anlage des Zugfahrzeugs (1) zu schützen, insbesondere vor durch den Generator erzeugten Überspannungspulsen.

12. Energieversorgungseinrichtung nach einem der vorhergehenden Ansprüche, **dadurch gekennzeichnet, dass** die Energieversorgungseinrichtung (8) eine Batterieladeschaltung (6) aufweist, wobei die Energieversorgungseinrichtung (8) dazu eingerichtet ist, die Batterie (5) über die an dem Versorgungseingangsanschluss (82) empfangene elektrische Versorgungsenergie mittels der Batterieladeschaltung (6) zu laden, wenn wenigstens ein vorbestimmtes Ladekriterium erfüllt ist.

13. Energieversorgungseinrichtung nach Anspruch 12, **dadurch gekennzeichnet, dass** das vorbestimmte Ladekriterium die Überschreitung eines bestimmten Werts des über den Versorgungseingangsanschluss (82) zugeführten Spannungspotentials ist.

14. Anordnung aus einem elektronischen Steuergerät und einer Energieversorgungseinrichtung nach einem der vorhergehenden Ansprüche, **dadurch gekennzeichnet, dass** das elektronische Steuergerät (4) elektrisch zwischen die elektrische Steckverbindung (3) des Nutzfahrzeuganhängers (2), die zum Anschluss an das Zugfahrzeug (1) des Nutzfahrzeuganhängers (2) ausgebildet ist, und der Energieversorgungseinrichtung (8) geschaltet ist, wobei die Energieversorgungseinrichtung (8) mit wenigstens einer Leitung (30) der elektrischen Steckverbindung (3), die elektrische Versorgungsenergie vom Zugfahrzeug (1) zum Nutzfahrzeuganhänger (2) überträgt, mittelbar über wenigstens einen Energieversorgungsausgangsanschluss (44) des elektronischen Steuergeräts (4) verbunden ist.

15. Anordnung nach Anspruch 14, **dadurch gekennzeichnet, dass** das elektronische Steuergerät (4) wenigstens einen Energieversorgungseingangsanschluss (39) aufweist, der zum Anschluss an wenigstens eine Leitung (30) der elektrischen Steckverbindung (3) des Nutzfahrzeuganhängers (2) eingerichtet ist, die zum Anschluss an das Zugfahrzeug (1) des Nutzfahrzeuganhängers (2) ausgebildet ist, wobei die Leitung (30) elektrische Versorgungsenergie vom Zugfahrzeug (1) zum Nutzfahrzeuganhänger (2) überträgt, und wobei der Energieversorgungsausgangsanschluss (44) des elektronischen Steuergeräts (4) über wenigstens ein in dem elektronischen Steuergerät (4) angeordnetes elektronisches Halbleiterbauelement (50) mit dem Energieversorgungseingangsanschluss des elektronischen Steuergeräts (4) abschaltbar verbunden ist, wobei die Verbindung durch das Halbleiterbauelement (50) oder ein anderes abschaltbares Schaltungsbauelement des elektronischen Steuergeräts (4) abschaltbar ist.

16. Anordnung nach Anspruch 15, **dadurch gekennzeichnet, dass** der Energieversorgungsausgangsanschluss (44) des elektronischen Steuergeräts (4) zum Einspeisen elektrischer Versorgungsenergie von der Energieversorgungseinrichtung (8) in das elektronische Steuergerät (4) über das Halbleiterbauelement (50), das andere abschaltbare Schaltungsbauelement oder ein anderes Bauelement mit Diodenfunktion auch bei abgeschaltetem Halbleiterbauelement (50) oder anderem abschaltbaren Schaltungsbauelement eingerichtet ist, um das Steuergerät (4) bzw. die mit dem Steuergerät (4) verbundenen elektrischen Komponenten (40, 41, 42, 43) mit elektrischer Versorgungsenergie zu versorgen.

17. Nutzfahrzeuganhänger (2) mit einer Anordnung nach einem der Ansprüche 14 bis 16.
